# EUROPÄISCHE PATENTSCHRIFT

(11) **EP 1 443 245 B1**
(45) Veröffentlichungstag und Bekanntmachung des Hinweises auf die Patenterteilung: **10.03.2010**
(21) Anmeldenummer: 03029395.5
(22) Anmeldetag: 19.12.2003
(51) Int. Cl.: F16H 3/093

(54) **Kraftfahrzeuggetriebe**
Motor vehicle gearbox
Transmission d'un véhicule à moteur

(30) Priorität: 20.02.2003 DE 10307178; 31.01.2003 DE 10304084
(43) Veröffentlichungstag der Anmeldung: 04.08.2004
(73) Patentinhaber: Volkswagen Aktiengesellschaft, 38436 Wolfsburg (DE)
(72) Erfinder: Blumenstein, Fritz, 48448 Wolfsburg (DE); Gröhlich, Hubert, Dr., 38154 Königslutter (DE); Schäfer, Michael, 38518 Gifhorn (DE); Schreiber, Wolfgang, Dr., 38550 Isenbüttel (DE)
(74) Vertreter: Hübsch, Dirk

(56) Entgegenhaltungen:
- EP-A1- 0 733 825
- EP-A1- 1 077 336
- EP-A2- 1 245 863
- WO-A-96/00863
- DE-A1- 10 133 629
- US-A- 5 799 536

## Beschreibung

Die Erfindung betrifft ein Kraftfahrzeuggetriebe gemäß dem Oberbegriff des Patentanspruches 1.

Im Stand der Technik sind unterschiedliche Kraftfahrzeuggetriebe der "Vier-Wellen-Bauart" bekannt. So wird in der EP 0 733 825 B 1 und in der EP 0 764 246 B 1 sowie in der gattungsgemaßen EP 1 077 336 A1 ein Kraftfahrzeuggetriebe offenbart, in dessen Gehäuse insgesamt vier Wellen, nämlich eine Antriebswelle, zwei Triebwellen und eine separate vierte Welle zur Realisierung des Rückwärtsganges angeordnet sind. Die Antriebswelle und die Triebwellen weisen miteinander in Eingriff stehende Zahnräder auf, wobei jeweils zwei Zahnräder jeweils eine separate Gangstufe bilden. Zur Übertragung von Rückwärts-Drehkraft auf den Achsantrieb des Kraftfahrzeuges, also zur Realisierung des Rückwärtsganges ist die vierte Welle vorgesehen, die ein Festrad zur Übertragung der Rückwärts-Drehkraft auf den Achsantrieb und ein auf der vierten Welle angeordnetes Losrad aufweist. Bei der Realisierung des Rückwärtsganges läuft der Kraftfluss über die Zahnräder bestimmter Gangstufen, - bzw. bei der EP 1 077 336 A1 über ein der dritten Gangstufe zugeordnetes Losrad mit einer kleineren Übersetzungsstufe - auf das dann auf der vierten Welle eingekuppelte Losrad und über das Festrad der vierten Welle von hier auf den Achsantrieb. Bei der Realisierung des Rückwärtsganges wird das ausgekuppelte Losrad dieser dritten Gangstufe als sogenanntes Zwischenrad verwendet. Die Praxis hat gezeigt, dass die bekannten Kraftfahrzeuggetriebe noch nicht optimal ausgebildet sind, also - nach wie vor - relativ großen Bauraum sowohl in axialer Richtung, als auch in der Breite benötigen. So weist die Antriebswelle der bekannten Kraftfahrzeuggetriebe jeweils zu jeder Gangstufe mindestens ein entsprechendes Zahnrad auf, die vzw. sequentiell hintereinander auf der Antriebswelle angeordnet sind. Hierdurch bedingt, insbesondere bei der Anordnung von sechs Vorwärts-Gangstufen weist die Antriebswelle dann eine entsprechende bestimmte axiale Länge auf. Weiterhin ist die vierte Welle im Bereich des Ölsumpfes des Kraftfahrzeuggetriebes angeordnet, so dass es bei der Realisierung des Rückwärtsganges zu entsprechenden Wirkungsverlusten, sogenannten "Planschverlusten" kommt. Schließlich ist das Gesamtübersetzungsverhältnis, bei eingelegtem Rückwärtsgang noch nicht optimal, was vom Fahrer eines Kraftfahrzeuges durchaus als unkomfortabel betrachtet werden könnte. Im Ergebnis ist daher das eingangs genannte Kraftfahrzeuggetriebe noch nicht optimal ausgebildet.

Der Erfindung liegt daher die Aufgabe zugrunde das bekannte Kraftfahrzeuggetriebe derart auszugestalten und weiterzubilden, dass dieses noch kompakter ausbildbar ist, insbesondere dessen axiale Baulänge verkürzt, dessen Breite verringert sowie dessen Wirkungsgrad erhöht ist.

Die zuvor aufgezeigte Aufgabe ist nun durch die Merkmale des Patentanspruches 1 gelöst. Durch die Ausbildung des Losrades der ersten Gangstufe mit zwei verschiedenen Übersetzungsstufen ergeben sich wesentliche Vorteile. Einerseits können die Durchmesser der ersten und zweiten Übersetzungsstufe sowie auch der Durchmesser des entsprechenden Zahnrades, vzw. Losrades der vierten Welle so gewählt werden, dass die vierte Welle möglichst nahe bei der - ersten - Triebwelle angeordnet werden kann. Hierdurch verkürzt sich die Breite des Gehäuses des Kraftfahrzeuggetriebes, so dass weniger Bauraum benötigt wird. Weiterhin kann die entsprechende zweite Übersetzungsstufe und auch vzw. das Losrad der vierten Welle so dimensioniert werden, dass ein Gesamtübersetzungsverhältnis für den Rückwärtsgang geschaffen ist, dass im wesentlichen dem Gesamtübersetzungsverhältnis des Getriebes bei eingelegter erster Gangstufe, also bei eingelegtem ersten Gang entspricht. Dies wird vom Fahrer des Kraftfahrzeuges als besonderes komfortabel empfunden, da er das Kraftfahrzeug auch rückwärts in - aus der ersten Gangstufe bekannter - gewohnter Weise manövrieren kann. Weiterhin wird die axiale Baulänge des Kraftfahrzeuggetriebes noch weiter verringert, nämlich durch die besondere Anordnung/Ausführung der Zahnräder der einzelnen weiteren Gangstufen, was im folgenden noch deutlich werden wird. Im Ergebnis sind die eingangs beschriebenen Nachteile vermieden und wesentliche Vorteile erzielt.

Es gibt nun verschiedene Möglichkeiten das erfindungsgemäße Kraftfahrzeuggetriebe in vorteilhafter Art und Weise auszugestalten und weiterzubilden. Hierfür darf zunächst auf die dem Patentanspruch 1 nachgeordneten Patentansprüche verwiesen werden. Im folgenden soll nun ein bevorzugtes Ausführungsbeispiel der Erfindung anhand der nachfolgenden Zeichnung und der dazugehörenden Beschreibung näher erläutert werden. In der Zeichnung zeigt:
- Fig. 1: das Kraftfahrzeuggetriebe in einem longitudinalen Schnitt,
- Fig. 2: das in Fig. 1 dargestellte Kraftfahrzeuggetriebe in einer vereinfachten schematischen Darstellung und
- Fig. 3: eine schematische Darstellung des in den Fig. 1 und 2 gezeigtem Kraftfahrzeuggetriebes aus einer anderen Sicht zur Verdeutlichung der Lage der einzelnen Wellen bzw. der Zahnräder.

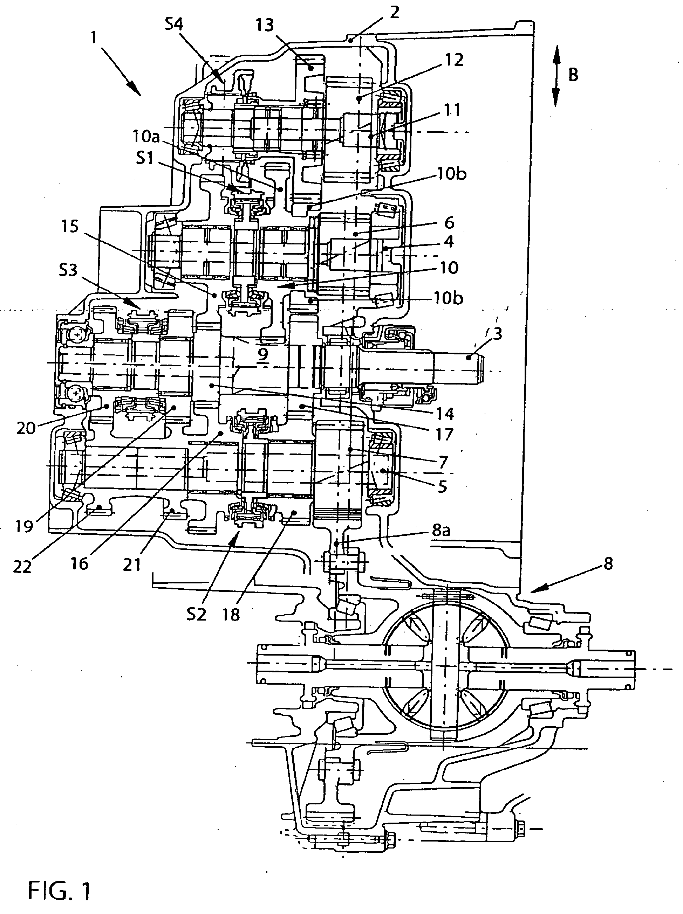

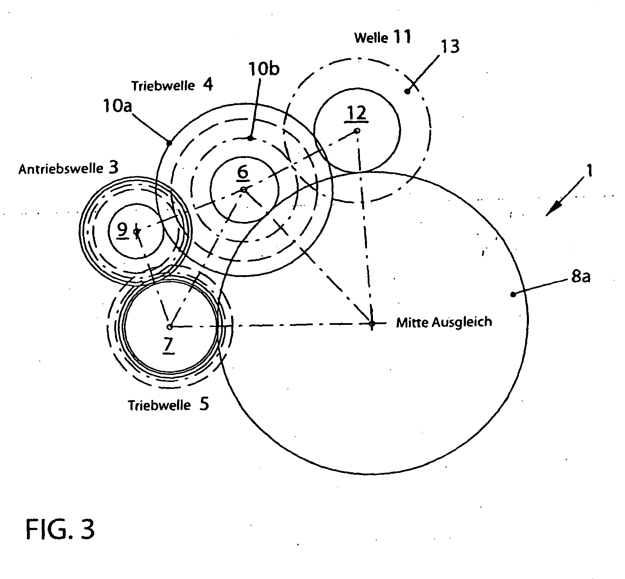

Die Fig. 1 bis 3 zeigen ein Kraftfahrzeuggetriebe 1 mit einem Gehäuse 2, mit einer Antriebswelle 3 und mit zwei Triebwellen 4 und 5. Die Triebwellen 4 und 5 sind - wie aus Fig. 3 ersichtlich - in einer Ebene versetzt von der Antriebswelle 3 angeordnet. Die Antriebswelle 3 und die Triebwellen 4 und 5 weisen miteinander in Eingriff stehende Zahnräder auf, wobei zwei Zahnräder jeweils eine Vorwärts-Gangstufe bilden. Welche Zahnräder hier jeweils eine bestimmte Gangstufe bilden wird im folgenden noch ausführlich erläutert werden.

Mindestens ein Zahnrad einer Gangstufe ist als ein- und/oder auskuppelbares Losrad und das andere Zahnrad als Festrad ausgebildet. Auch dies wird im folgenden noch deutlich werden.

Jede Triebwelle 4 und 5 weist nun ein ein Zahnrad, vzw. ein Festrad 6 und 7 zur Übertragung von Drehkraft auf einen Achsantrieb 8 auf. Das Festrad 9 der ersten Gangstufe ist auf der Antriebswelle 3 und das Losrad 10 der ersten Gangstufe ist in dem hier gezeigten bevorzugten Ausführungsbeispiel auf der ersten Triebswelle 4 angeordnet. Weiterhin ist eine vierte Welle 11 zur Übertragung von Rückwärts-Drehkraft auf den Achsantrieb 8 vorgesehen. Hierzu weist die vierte Welle 11 ein vzw. als Festrad 12 ausgeführtes Zahnrad zur Übertragung von Rückwärts-Drehkraft auf den Achsantrieb 8 auf. Weiterhin weist die vierte Welle 11 ein mit dem Losrad 10 der ersten Gangstufe in Eingriff stehendes weiteres Zahnrad, nämlich ein vzw. ein- und/oder auskuppelbares Losrad 13 auf. Denkbar ist auch, dass das mit dem Achsantrieb 8 wirksam verbundene Zahnrad der vierten Welle 11 als Losrad und das mit dem Losrad 10 der ersten Triebwelle 4 in Eingriff stehende Zahnrad als Festrad ausgebildet ist.

Das Losrad 10 der ersten Gangstufe weist mindestens zwei unterschiedliche Übersetzungsstufen 10a und 10b auf, wobei die erste Übersetzungsstufe 10a mit dem auf der Antriebswelle 3 angeordneten Festrad 9 und die zweite Übersetzungsstufe 10b mit entsprechenden Zahnrad, vzw. dem Losrad 13 der vierten Welle 11 in Eingriff steht. Hierdurch werden entscheidende Vorteile erzielt, zunächst kann nämlich die vierte Welle 11 aufgrund der besonderen Ausbildungen des Losrades 10 der ersten Gangstufe sehr nahe an die erste Triebwelle 4 herangeführt bzw. sehr nahe an dieser gelagert werden. Hierbei verkürzen sich die Breitenabmessungen in Richtung der Pfeile B des Kraftfahrzeuggetriebes 1. Weiterhin führt dies zu der Realisierung eines weiteren Vorteils, der im folgenden noch erläutert werden wird.

Bevor nun auf die besonderen Vorteile der hier dargestellten Ausführungsform näher eingegangen wird, darf ganz allgemein zuvor folgendes ausgeführt werden: Unter dem Begriff "erste Gangstufe" ist im wesentlichen der erste Gang des Kraftfahrzeuggetriebes 1 gemeint, weiterhin sind dann mit den Bezeichnungen "zweite Gangstufe" der zweite Gang des Kraftfahrzeuggetriebes 1 gemeint usw. bis zur "sechsten Gangstufe", wo der sechste Gang des Kraftfahrzeuggetriebes 1 gemeint ist. Mit dem Begriff "Übersetzungsstufe" sind hier im wesentlichen die unterschiedlichen Übersetzungsmöglichkeiten des Losrades 10 der ersten Gangstufe gemeint, also im wesentlichen hier die unterschiedlichen Zahnkränze mit den unterschiedlichen Außenradien.

Aufgrund der bestimmten Dimensionierung der ersten Übersetzungsstufe 10a bzw. der zweiten Übersetzungsstufe 10b, insbesondere wenn die erste Übersetzungsstufe 10a einen größeren Durchmesser aufweist als die zweite Übersetzungsstufe 10b, kann nun bei entsprechender Dimensionierung des Losrades 13 erreicht werden, dass das Gesamtübersetzungsverhältnis des Kraftfahrzeugge triebes 1 bei eingelegtem Rückwärtsgang genau den Gesamtübersetzungsverhältnis des Kraftfahrzeuggetriebes 1 bei eingelegter erste Gangstufe entspricht. Dies führt zu besonders gutem Komfortverhalten, dass vom Fahrer des Kraftfahrzeuges bei der Rückwärtsfahrt wahrgenommen wird.

Im folgenden sollen nunmehr die Einzelheiten des Kraftfahrzeuggetriebes 1 und dessen weitere Vorteile geschildert werden:

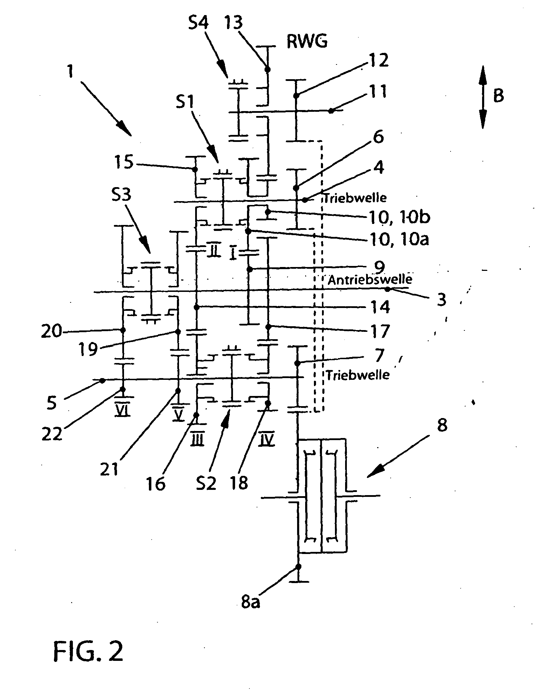

Zunächst ist hier der Achsantrieb 8 des Kraftfahrzeuggetriebes 1 vzw. als Differential ausgeführt und weist ein Achsantriebsrad 8a auf. Das Achsantriebsrad 8a steht mit den Festrädern 6 und 7 der Triebwellen 4 und 5 bzw. mit dem Festrad 12 der vierten Welle 11 in Eingriff. Dies ist auch besonders gut durch die gestrichelte Darstellung in der Fig. 2 und auch aus der Fig. 3 ersichtlich.

Die einzelnen Gangstufen, also die erste bis sechste Gangstufe des hier dargestellten Kraftfahrzeuggetriebes 1 und wie diese innerhalb des Kraftfahrzeuggetriebes 1 realisiert sind, wird nunmehr im folgenden erläutert:

Wie bereits ausgeführt, wird die erste Gangstufe hier durch das Festrad 9, das auf der Antriebswelle 3 angeordnet ist und das Losrad 10, das auf der ersten Triebwelle 4 angeordnet ist, gebildet. Die zweite Gangstufe wird nun durch das auf der Antriebswelle 3 angeordnete weitere Festrad 14 und das auf der ersten Triebwelle 4 vorgesehene Losrad 15 gebildet. Zwischen den auf der ersten Triebwelle 4 angeordneten Losrädern 10 und 15 ist eine eine Schiebemuffe aufweisende Synchronisiervorrichtung S1 vorgesehen. Mit Hilfe der Synchronisiervorrichtung S1 lassen sich die Losräder 10 und 15 ein- und/oder auskuppeln. Vom besonderen Vorteil ist hier, dass das Festrad 14 auf der Antriebswelle 3 gleichzeitig auch ein auf der zweiten Triebwelle 5 angeordnetes Losrad 16 antreiben kann, wobei durch das Festrad 14 und das Losrad 16 dann die dritte Gangstufe gebildet wird. Hierdurch kann die axial benötigte Länge der Antriebswelle 3 verringert werden.

Die Antriebswelle 3 weist ein weiteres Festrad 17 als Zahnrad für die vierte Gangstufe auf, das mit einem Losrad 18, das auf der zweite Triebwelle 5 vorgesehen ist, entsprechend in Eingriff steht. Anders ausgedrückt, durch das Festrad 17 und das Losrad 18 wird die vierte Gangstufe gebildet, wobei zwischen den Losrädern 16 und 18 wiederum eine Synchronisiervorrichtung S2 einschließlich der entsprechenden Schiebemuffen-Einheit vorgesehen ist. Die vierte Gangstufe liegt - wie Fig. 1 deutlich zeigt - also in der gleichen Ebene wie die Rückwärtsgangstufe, die gebildet wird durch das Losrad 13 und die zweite Übersetzungsstufe 10b des Losrades 10 der ersten Gangstufe.

Schließlich weist die Antriebswelle 3 zwei Losräder 19 und 20 auf, die mit Festrädern 21 und 22, die auf der zweiten Triebwelle 5 angeordnet sind in Eingriff stehen, um hier die fünfte und sechste Gangstufe zu bilden. So wird die fünfte Gangstufe gebildet durch das Losrad 19 auf der Antriebswelle 3 und das Festrad 21 auf der zweiten Triebswelle 5 und die sechste Gangstufe gebildet durch das Losrad 20 auf der Antriebswelle 3 und das Festrad 22 auf der zweiten Triebwelle 5. Zwischen den Losrädern 19 und 20 ist eine weitere Synchronisiervorrichtung S3 einschließlich der entsprechenden Schiebemuffen-Einheit vorgesehen. Denkbar ist auch, dass die Anordnung zwischen der Antriebswelle 3 und der zweiten Triebwelle 5 umgekehrt ist, also die Synchronisiervorrichtung S3 auf der zweiten Triebwelle 5 und hier also auch die entsprechenden Losräder und auf der Antriebswelle 3 die entsprechenden Festräder vorgesehen sind.

Schließlich zeigt die Fig. 1 sowie die Fig. 2 die Synchronisiervorrichtung S4, zum Ein- und/oder Auskuppeln des auf der vierten Welle 11 angeordneten Losrades 13 zur Realisierung des Rückwärtsganges RWG.

Zur Realisierung des Rückwärtsganges RGW, d. h. zur Übertragung einer Rückwärts-Drehkraft bei eingelegtem Rückwärtsgang im Getriebe, wird das Losrad 10 der ersten Gangstufe als Zwischenrad eingesetzt, d. h. die Synchronisiervorrichtung S1 trägt dafür Sorge, dass das Losrad 10 hier frei laufen kann, also nicht mit der ersten Triebwelle 4 verbunden, nämlich ausgekuppelt ist. Der Kraftfluss läuft dann über das Festrad 9 der ersten Gangstufe über die erste Übersetzungsstufe 10a, dann über die zweite Übersetzungsstufe 10b auf das eingekuppelte Losrad 13 der vierten Welle 11 und von hier dann über das Festrad 12 der vierten Welle 11 auf das Achsantriebsrad 8a des als Differential ausgeführten Achsantriebes 8.

Durch die besondere Anordnung der Zahnräder bzw. der Festrad/Losradanordnung, so wie hier erläutert, ergibt sich eine besonders kurze axiale Baulänge des Kraftfahrzeuggetriebes 1, insbesondere dadurch, dass auf der Antriebswelle 3 jeweils Festräder angeordnet sind, nämlich auch das Festrad 14, das sowohl zur Realisierung der zweiten als auch zur Realisierung der dritten Gangstufe gemeinsam benutzt wird. Bei der Realisierung der zweiten Gangstufe läuft nämlich der Kraftfluss über das Festrad 14 auf das eingekuppelte Losrad 15 und von hier aus über das Festrad 6 auf das Achsantriebsrad 8a. Bei der Realisierung der dritten Gangstufe läuft der Kraftfluss über das Festrad 14 auf das eingekuppelte Losrad 16 und über die zweite Triebwelle 5 und das hier angeordnete Festrad 7 auf das Achsantriebsrad 8a.

Die Fig. 3 zeigt, dass die Achsübersetzungen der Triebwellen 4 und 5 unterschiedlich sind, so dass der Achsabstand zwischen den einzelnen Triebwellen 4 und 5 und der Mitte des Achsantriebes 8, hier der Differenzialmitte unterschiedlich sind. Auch hierdurch ist eine sehr kompakte Bauweise des Kraftfahrzeuggetriebes 1 ermöglicht, insbesondere kann durch Veränderung der Achsübersetzungen der 'rriebwellen 4 und 5 bzw. der vierten Welle 11 das hier beschriebene Kraftfahrzeuggetriebe 1 jeweils für PKW's bzw. LKW's entsprechend der jeweiligen Dimensionierung angepaßt werden. Insbesondere läßt sich durch entsprechende Auswahl der Abstände der jeweiligen Wellen und über die entsprechenden Zähnezahlverhältnisse der Antriebswelle 3 bzw. der Triebwellen 4 und 5 eine große Gesamtspreizung, d. h. mehrere Übersetzungsvarianten des Kraftfahrzeuggetriebes 1 realisieren.

Das hier als Losrad 10 der ersten Gangstufe ausgebildete Zahnrad kann auf unterschiedliche Art und Weise ausgebildet sein. So können die Übersetzungsstufen 10a und 10b als integrale Bestandteile eines entsprechenden Zahnrades ausgebildet sein. Denkbar ist auch, dass die Übersetzungsstufe 10b auf ein Zahnrad aufgesteckt wird, das die Übersetzungsstufe 10a bereits aufweist. Auch die Verschweißung von verschiedenen entsprechenden Zahnrädern ist denkbar, so dass die Übersetzungsstufen 10a und 10b entstehen. Entscheidend ist, dass das Losrad 10 der ersten Gangstufe als sogenanntes "Doppelrad" ausgebildet ist.

So ist die Anordnung der Synchronisiervorrichtungen S1 bis S4 und der einzelnen Zahnräder - wie bereits erläutert - hier bei dem Kraftfahrzeuggetriebe 1 besonders vorteilhaft, da durch deren Lage und Gestaltung auch die Synchronisiervorrichtung S4, die insbesondere als Außenkonussynchronisierung ausgebildet ist, und die Lage dieser zur Synchronisiervorrichtung S1 auf der ersten Triebwelle 4 vorteilhaft ist.

Von weiterem Vorteil ist hier, dass die vierte Welle 11 außerhalb des Ölsumpfes gelagert ist, d. h. hier bei dem Kraftfahrzeuggetriebe 1, so wie in Fig. 1 bzw. in Fig. 2 dargestellt, im wesentlichen oberhalb des Achsantriebes 8 liegt. Hierdurch ist eine Spritzölzufuhr zur vierten Welle 11 gewährleistet, es werden aber Wirkungsverluste, insbesondere die sogenannten "Planschverluste" vermieden.

Im Ergebnis ist ein besonders vorteilhaftes Kraftfahrzeuggetriebe 1 realisiert, dass die oben erwähnten Vorteile aufweist.

### Bezugszeichenliste:

- 1: Kraftfahrzeuggetriebe
- 2: Gehäuse
- 3: Antriebswelle
- 4: erste Triebwelle
- 5: zweite Triebwelle
- 6: Festrad der ersten Triebwelle
- 7: Festrad der zweiten Triebwelle
- 8: Achsantrieb
- 8a: Achsantriebsrad
- 9: Festrad der ersten Gangstufe
- 10: Losrad der ersten Gangstufe
- 10a: erste Übersetzungsstufe
- 10b: zweite Übersetzungsstufe
- 11: vierte Welle
- 12: Festrad der vierten Welle
- 13: Losrad der vierten Welle
- 14: Festrad der zweiten und dritten Gangstufe
- 15: Losrad der zweiten Gangstufe
- 16: Losrad der dritten Gangstufe
- 17: Festrad der vierten Gangstufe
- 18: Losrad der vierten Gangstufe
- 19: Losrad der fünften Gangstufe
- 20: Losrad der sechsten Gangstufe
- 21: Festrad der fünften Gangstufe
- 22: Festrad der sechsten Gangstufe
- S1: Synchronisierungsvorrichtung
- S2: Synchronisierungsvorrichtung
- S3: Synchronisierungsvorrichtung
- S4: Synchronisierungsvorrichtung
- B: Pfeil
- RWG: Rückwärtsgang

## Patentansprüche

1. Kraftfahrzeuggetriebe (1) mit einem Gehäuse (2), mit einer Antriebswelle (3) und mit zwei Triebwellen (4, 5), wobei die Triebwellen in einer Ebene versetzt von der Antriebswelle (3) angeordnet sind, wobei die Antriebswelle (3) und die Triebwellen (4, 5) miteinander in Eingriff stehende Zahnräder aufweisen und zwei Zahnräder jeweils eine Gangstufe bilden, wobei mindestens ein Zahnrad einer Gangstufe als ein- und/oder auskuppelbares Losrad und das andere Zahnrad als Festrad ausgebildet ist, wobei jede Triebwelle (4, 5) ein Zahnrad, insbesondere ein Festrad (6, 7) zur Übertragung von Drehkraft auf einen Achsantrieb (8) aufweist, wobei das Festrad (9) einer bestimmten Gangstufe auf der Antriebswelle (3) und das Losrad (10) dieser bestimmten Gangstufe auf einer - ersten - Triebwelle (4) angeordnet ist, wobei eine vierte Welle (11) zur Übertragung von Rückwärts-Drehkraft auf den Achsantrieb (8) vorgesehen ist und die vierte Welle (11) ein Zahnrad, vzw. ein Festrad (12) zur Übertragung von Rückwärts-Drehkraft auf den Achsantrieb (8) und ein mit dem Losrad (10) dieser bestimmten Gangstufe in Eingriff stehendes weiteres Zahnrad, vzw. ein ein- und/oder auskuppelbares Losrad (13) aufweist, wobei das Losrad (10) dieser bestimmten Gangstufe mindestens zwei unterschiedliche Übersetzungsstufen (10a, 10b) aufweist und die erste Übersetzungsstufe (10a) mit dem auf der Antriebswelle (3) angeordneten Festrad (9) und die zweite Übersetzungsstufe (10b) mit dem entsprechenden weiteren Zahnrad der vierten Welle (11) in Eingriff steht, **dadurch gekennzeichnet, dass** diese bestimmte Gangstufe als erste Gangstufe ausgebildet ist und dass die Antriebswelle (3) ein weiteres Festrad (14) aufweist und dieses Festrad (14) als Zahnrad der zweiten und dritten Gangstufe vorgesehen ist.

2. Kraftfahrzeuggetriebe nach dem vorhergehenden Anspruch, **dadurch gekennzeichnet, dass** die erste Übersetzungsstufe (10a) des Losrades (10) der ersten Gangstufe einen größeren Durchmesser aufweist als die zweite Übersetzungsstufe (10b) des Losrades (10) der ersten Gangstufe.

3. Kraftfahrzeuggetriebe nach einem der vorhergehenden Ansprüche, **dadurch gekennzeichnet, dass** die zweite Ubersetzungsstufe (10b) und die Übersetzung des Losrades (13) der vierten Welle (11) so gewählt ist, dass das Gesamtübersetzungsverhältnis des Getriebes (1) bei eingelegtem Rückwärtsgang dem Gesamtübersetzungsverhältnis des Getriebes (1) bei eingelegter erster Gangstufe entspricht.

4. Kraftfahrzeuggetriebe nach einem der vorhergehenden Ansprüche, **dadurch gekennzeichnet, dass** der Achsantrieb (8) als Differential ausgeführt ist und ein Achsantriebsrad (8a) aufweist und das Achsantriebsrad (8a) mit den Festrädern (6, 7, 12) der Triebwellen (4, 5) bzw. der vierten Welle (11) in Eingriff steht.

5. Kraftfahrzeuggetriebe nach einem der vorhergehenden Ansprüche, **dadurch gekennzeichnet, dass** die Antriebswelle (3) ein weiteres Festrad (17) als Zahnrad für die vierte Gangstufe aufweist.

6. Kraftfahrzeuggetriebe nach einem der vorhergehenden Ansprüche, **dadurch gekennzeichnet, dass** die Antriebswelle (3) zwei Losräder (19, 20) als Zahnräder für die fünfte und sechste Gangstufe aufweist.

7. Kraftfahrzeuggetriebe nach einem der vorhergehenden Ansprüche, **dadurch gekennzeichnet, dass** die erste Triebwelle (4) ein Losrad (15) als Zahnrad für die zweite Gangstufe und die zweite Triebwelle (5) jeweils ein Losrad (16, 18) als Zahnrad für die dritte und vierte Gangstufe und jeweils ein Festrad (21, 22) für die fünfte und sechste Gangstufe aufweist.

8. Kraftfahrzeuggetriebe nach einem der vorhergehenden Ansprüche, **dadurch gekennzeichnet, dass** zur Übertragung einer Rückwärts-Drehkraft bei eingelegtem Rückwärtsgang das Losrad (10) der ersten Gangstufe als Zwischenrad einsetzbar ist.

9. Kraftfahrzeuggetriebe nach einem der vorhergehenden Ansprüche, **dadurch gekennzeichnet, dass** das Losrad (13) der vierten Welle (11) für den Rückwärtsgang in der gleichen Ebene liegt wie das Losrad (18) der vierten Gangstufe.

10. Kraftfahrzeuggetriebe nach einem der vorhergehenden Ansprüche, **dadurch gekennzeichnet, dass** die Achsübersetzungen der Triebwellen (4, 5) unterschiedlich sind, so dass der Achsabstand zwischen den einzelnen Triebwellen (4, 5) und der Mitte des Achsantriebes (8) unterschiedlich ist.

11. Kraftfahrzeuggetriebe nach einem der vorhergehenden Anspruche, **dadurch gekennzeichnet, dass** die vierte Welle (11) außerhalb des Ölsumpfes gelagert ist.

## Claims

1. Motor vehicle gearbox (1) having a housing (2), having a drive input shaft (3) and having two drive shafts (4, 5), wherein the drive shafts are arranged in a plane offset from the drive input shaft (3), wherein the drive input shaft (3) and the drive shafts (4, 5) have gearwheels which are in engagement with one another and wherein two gearwheels form in each case one gear stage, wherein at least one gearwheel of a gear stage is designed as an engageable and/or disengageable loose gear and the other gearwheel is designed as a fixed gear, wherein each drive shaft (4, 5) has a gearwheel, in particular a fixed gear (6, 7), for transmitting rotatory force to an axle gearing (8), wherein the fixed gear (9) of a certain gear stage is arranged on the drive input shaft (3) and the loose gear (10) of said certain gear stage is arranged on a - first - drive shaft (4), wherein a fourth shaft (11) is provided for transmitting reverse rotatory force to the axle gearing (8), and wherein the fourth shaft (11) has a gearwheel, preferably a fixed gear (12), for transmitting reverse rotatory force to the axle gearing (8) and has a further gearwheel, preferably an engageable and/or disengageable loose gear (13), which is in engagement with the loose gear (10) of said certain gear stage, wherein the loose gear (10) of said certain gear stage has at least two different transmission ratio stages (10a, 10b) and wherein the first transmission ratio stage (10a) is in engagement with the fixed gear (9) which is arranged on the drive input shaft (3) and the second transmission ratio stage (10b) is in engagement with the corresponding further gearwheel of the fourth shaft (11), **characterized in that** said certain gear stage is formed as the first gear stage and **in that** the drive input shaft (3) has a further fixed gear (14) and said fixed gear (14) is provided as a gearwheel of the second and third gear stages.

2. Motor vehicle gearbox according to the preceding claim, **characterized in that** the first transmission ratio stage (10a) of the loose gear (10) of the first gear stage has a greater diameter than the second transmission ratio stage (10b) of the loose gear (10) of the first gear stage.

3. Motor vehicle gearbox according to one of the preceding claims, **characterized in that** the second transmission ratio stage (10b) and the transmission ratio of the loose gear (13) of the fourth shaft (11) are selected such that the overall transmission ratio of the gearbox (1) when the reverse gear is engaged corresponds to the overall transmission ratio of the gearbox (1) when the first gear stage is engaged.

4. Motor vehicle gearbox according to one of the preceding claims, **characterized in that** the axle gearing (8) is designed as a differential and has an axle gearing gear (8a), and the axle gearing gear (8a) is in engagement with the fixed gears (6, 7, 12) of the drive shafts (4, 5) and of the fourth shaft (11).

5. Motor vehicle gearbox according to one of the preceding claims, **characterized in that** the drive input shaft (3) has a further fixed gear (17) as a gearwheel for the fourth gear stage.

6. Motor vehicle gearbox according to one of the preceding claims, **characterized in that** the drive input shaft (3) has two loose gears (19, 20) as gearwheels for the fifth and sixth gear stages.

7. Motor vehicle gearbox according to one of the preceding claims, **characterized in that** the first drive shaft (4) has a loose gear (15) as a gearwheel for the second gear stage and the second drive shaft (5) has in each case one loose gear (16, 18) as a gearwheel for the third and fourth gear stages and in each case one fixed gear (21, 22) for the fifth and sixth gear stages.

8. Motor vehicle gearbox according to one of the preceding claims, **characterized in that** the loose gear (10) of the first gear stage can be used as an intermediate gear for transmitting a reverse gear rotatory force when the reverse gear is engaged.

9. Motor vehicle gearbox according to one of the preceding claims, **characterized in that** the loose gear (13) of the fourth shaft (11) for the reverse gear is situated in the same plane as the loose gear (18) of the fourth gear stage.

10. Motor vehicle gearbox according to one of the preceding claims, **characterized in that** the axle transmission ratios of the drive shafts (4, 5) are different, such that the axial spacing between the individual drive shafts (4, 5) and the centre of the axle gearing (8) is different.

11. Motor vehicle gearbox according to one of the preceding claims, **characterized in that** the fourth shaft (11) is mounted outside the oil sump.

## Revendications

1. Transmission de véhicule à moteur (1) avec un boîtier (2), avec un arbre d'entraînement d'entrée (3) et avec deux arbres de propulsion (4, 5), les arbres de propulsion étant disposés dans un plan décalé par rapport à l'arbre d'entraînement d'entrée (3), l'arbre d'entraînement d'entrée (3) et les arbres de propulsion (4, 5) comportant des roues dentées en prise entre elles et deux roues dentées formant respectivement un étage de rapport, au moins une roue dentée d'un étage de rapport prenant la forme d'une roue libre pouvant être couplée ou découplée et l'autre roue dentée prenant la forme d'une roue fixe, chaque arbre de propulsion (4, 5) comportant une roue dentée, notamment une roue fixe (6, 7), pour la transmission d'une force de rotation sur un entraînement d'entrée d'essieu (8), la roue fixe (9) d'un étage de rapport donné étant disposée sur l'arbre d'entraînement d'entrée (3) et la roue libre (10) de cet étage de rapport donné étant disposée sur un - premier - arbre de propulsion (4), un quatrième arbre (11) étant prévu pour la transmission d'une force de rotation vers l'arrière sur l'entraînement d'entrée d'essieu (8) et le quatrième arbre (11) comportant une roue dentée et/ou une roue fixe (12) pour la transmission de la force de rotation vers l'arrière sur l'entraînement d'entrée d'essieu (8) et une autre roue dentée en prise avec la roue libre (10) de cet étage de rapport donné et/ou une roue libre (13) pouvant être couplée ou découplée, la roue libre (10) de cet étage de rapport donné comportant au moins deux étages de démultiplication (10a, 10b) différents, le premier étage de démultiplication (10a) étant en prise avec la roue fixe (9) disposée sur l'arbre d'entraînement d'entrée (3) et le deuxième étage de démultiplication (10b) étant en prise avec l'autre roue dentée correspondante du quatrième arbre (11), **caractérisée en ce que** cet étage de rapport donné prend la forme d'un premier étage de rapport et que l'arbre d'entraînement d'entrée (3) comporte une autre roue fixe (14) et que cette roue fixe (14) est prévue sous la forme d'une roue dentée du deuxième et du troisième étage de rapport.

2. Transmission de véhicule à moteur selon la revendication précédente, **caractérisée en ce que** le premier étage de démultiplication (10a) de la roue libre (10) du premier étage de rapport présente un diamètre supérieur au deuxième étage de démultiplication (10b) de la roue libre (10) du premier étage de rapport.

3. Transmission de véhicule à moteur selon l'une quelconque des revendications précédentes, **caractérisée en ce que** le deuxième étage de démultiplication (10b) et la démultiplication de la roue libre (13) du quatrième arbre (11) est choisie de telle sorte que le rapport de démultiplication global de la transmission (1) lorsque le rapport arrière est passé correspond au rapport de démultiplication global de la transmission (1) lorsque le premier étage de rapport est passé.

4. Transmission de véhicule à moteur selon l'une quelconque des revendications précédentes, **caractérisée en ce que** l'entraînement d'entrée d'essieu (8) prend la forme d'un différentiel et qu'il comporte une roue d'entraînement d'entrée d'essieu (8a) et que la roue d'entraînement d'entrée d'essieu (8a) est en prise avec les roues fixes (6, 7, 12) des arbres de propulsion (4, 5) et/ou du quatrième arbre (11).

5. Transmission de véhicule à moteur selon l'une quelconque des revendications précédentes, **caractérisée en ce que** l'arbre d'entraînement d'entrée (3) comporte une autre roue fixe (17) prenant la forme d'une roue dentée pour le quatrième étage de rapport.

6. Transmission de véhicule à moteur selon l'une quelconque des revendications précédentes, **caractérisée en ce que** l'arbre d'entraînement d'entrée (3) comporte deux roues libres (19, 20) prenant la forme de roues dentées pour le cinquième et le sixième étage de rapport.

7. Transmission de véhicule à moteur selon l'une quelconque des revendications précédentes, **caractérisée en ce que** le premier arbre de propulsion (4) comporte une roue libre (15) prenant la forme d'une roue dentée pour le deuxième étage de rapport et **en ce que** le deuxième arbre de propulsion (5) comprend respectivement une roue libre (16, 18) prenant la forme d'une roue dentée pour le troisième et le quatrième étage de rapport et respectivement une roue fixe (21, 22) pour le cinquième et le sixième étage de rapport.

8. Transmission de véhicule à moteur selon l'une quelconque des revendications précédentes, **caractérisée en ce que** pour la transmission d'une force de rotation vers l'arrière lorsque le rapport arrière est passé, la roue libre (10) du premier étage de rapport peut prendre la forme d'une roue intermédiaire.

9. Transmission de véhicule à moteur selon l'une quelconque des revendications précédentes, **caractérisée en ce que** la roue libre (13) du quatrième arbre (11) repose dans le même plan pour le rapport arrière que la roue libre (18) du quatrième étage de rapport.

10. Transmission de véhicule à moteur selon l'une quelconque des revendications précédentes, **caractérisée en ce que** les démultiplications d'essieu des arbres de propulsion (4, 5) sont différentes, de sorte que l'écartement axial entre les différents arbres de propulsion (4, 5) et le centre de l'entraînement d'entrée d'essieu (8) est différent.

11. Transmission de véhicule à moteur selon l'une quelconque des revendications précédentes, **caractérisée en ce que** le quatrième arbre (11) est disposé à l'extérieur du carter d'huile.
